# EUROPÄISCHE PATENTSCHRIFT

(11) **EP 0 690 546 B1**
(45) Veröffentlichungstag und Bekanntmachung des Hinweises auf die Patenterteilung: **22.04.1998**
(21) Anmeldenummer: 95109889.6
(22) Anmeldetag: 24.06.1995
(51) Int. Cl.: H02K 15/02, H02K 1/18, H02K 5/04

(54) **Elektrische Grossmaschine**
Heavy electric machine
Machine électrique de grande dimension

(30) Priorität: 01.07.1994 DE 4423060
(43) Veröffentlichungstag der Anmeldung: 03.01.1996
(73) Patentinhaber: ABB PATENT GmbH, 68309 Mannheim (DE)
(72) Erfinder: Fischl, Rolf, D-68642 Bürstadt (DE); Ehrt, Peter, D-64683 Einhausen (DE); Lulay, Dieter, D-68526 Ladenburg (DE)
(74) Vertreter: Rupprecht, Klaus, Dipl.-Ing.

(56) Entgegenhaltungen:
- EP-A- 0 175 075
- CH-A- 516 248
- DE-A- 3 319 997
- DE-A- 3 624 923

## Beschreibung

Die Erfindung betrifft eine elektrische Großmaschine nach dem Oberbegriff des Anspruchs 1.

Großmaschinen, wie zum Beispiel Turbogeneratoren, die ein Gehäuse mit darin angeordneten Stator und Rotor aufweisen, sind bekannt. Üblicherweise erfolgt die Herstellung einer derartigen Großmaschine, indem zunächst am Innenumfang des Gehäuses Tragelemente befestigt werden, welche zur Halterung von den Stator bildenden Blechpaketen dienen. Diese Blechpakete werden in der Großmaschinenfabrik Stück für Stück in das Gehäuse eingesetzt und schließlich mittels entsprechender Spannvorrichtungen verspannt und im Gehäuse verankert. Anschließend erfolgt die Anbringung der Wicklungsleiter des Stators und deren Wickelköpfe sowie deren Isolierung. Anschließend kann der Rotor eingesetzt werden, der in stirnseitig vorgesehenen Lagern geführt ist.

Verständlicherweise beansprucht die Montage der Bleche beziehungsweise Blechpakete sowie deren Verspannen erhebliche Zeit, wobei auf sorgfältige Beachtung der vorgegebenen Maße und Toleranzen besonderer Wert zu legen ist.

Bei einer lebensdauer- oder schadensfallbedingten Reparatur der Großmaschine, die häufig vorher bestimmbar ist, wird üblicherweise auch der Stator überholt. Zu diesem Zweck sind die Einbauten im Gehäuse völlig zu entfernen. Sofern die Großmaschine in die Großmaschinenfabrik gebracht werden kann, um dort diese Arbeiten auszuführen, bestehen keine wesentlichen Probleme, ausgenommen daß die Durchführung der Arbeiten, wie erwähnt, eine beträchtliche Zeitdauer, ca. 8 bis 10 Monate, beansprucht.

Im allgemeinen jedoch ist es nicht möglich, die Großmaschine von ihrem jeweiligen Einsatzort abzuziehen und in das Herstellerwerk zu bringen, sei es weil der diesbezügliche Transportaufwand als zu groß angesehen wird oder weil der diesbezügliche Zeitaufwand für den Abtransport, die Wiederherstellung und den Rücktransport der Großmaschine unakzeptabel groß ist.

In derartigen Fällen ist es allgemein verbreitet, die Überholung der Großmaschine vor Ort, das heißt am jeweiligen Betriebsort der Großmaschine im EVU, vorzunehmen, um auf diese Weise zumindest den Zeitaufwand für den Hin- und Rücktransport einzusparen. Allerdings kann hierbei nicht mit der gleichen Zeitdauer für die Wiederherstellung der Großmaschine gerechnet werden wie im Herstellerwerk, da entsprechende Maschinen und Vorrichtungen, wie sie dort vorhanden sind, im Regelfall nicht zur Verfügung stehen. Die Blechpakete des Stators müssen demgemäß Blech für Blech einzeln aufgebaut werden, wobei die Einhaltung der festgehaltenen Maßanforderungen einen besonderen Aufwand erfordert, der sich ebenfalls auf den Zeitbedarf auswirkt.

Aus der CH-A-516 428 ist eine elektrische Maschine der eingangs genannten Art einschließlich des Verfahrens zu ihrer Herstellung bekannt, wobei die dort benutzten Verspannungselemente zur Sicherung des Statorpakets so vorgesehen sind, daß sie gleichermaßen in radialer und in tangentialer Richtung wirksam sind. Eine Differenzierung ist also nicht möglich.

Ausgehend von diesem Stand der Technik ist es Aufgabe der Erfindung eine Großmaschine der eingangs genannten Art anzugeben, bei welcher die Befestigung des Stators gezielt ohne größere zeitliche Unterbrechung des Betriebs der Großmaschine durchgeführt werden kann, sowie ein Verfahren zur Herstellung.

Erfindungsgemäß wird diese Aufgabe gelöst durch die kennzeichnenden Merkmale des Patentanspruchs 1. Demgemäß ist vorgesehen, daß der Stator mittels Spannelementen, die wahlweise durch Radialverspannung oder durch Tangentialverspannung wirken, gehalten ist, während bislang bei bekannten Großmaschinen der jeweilige Stator ortsfest im Gehäuse der betreffenden Großmaschine mittels einer gleichermaßen in radialer und in tangentialer Richtung wirkende Verspannung befestigt ist.

Während die Tangentialverspannung zur Aufnahme der aus dem Kurzschlußmoment der Großmaschine resultierenden Kräfte dient, ist die Radialverspannung dazu vorgesehen, alle übrigen Kräfte aufzunehmen. Dabei ist entsprechend einer vorteilhaften Weiterbildung der Erfindung die Radial- wie auch die Tangentialverspannung aus keilförmigen Spannelementen zusammengesetzt, welche am Außenumfang des Einschubstators und am Innenumfang des Gehäuses formschlüssig oder kraft- und formschlüssig angreifen und miteinander zusammenarbeiten.

Zur Führung der Spannelemente sowie zur Übertragung der aus der Tangentialverspannung resultierenden Kräfte sind entsprechend einer bevorzugten Ausführungsform der Erfindung am Innenumfang des Gehäuses ebenfalls keilförmige Tragelemente befestigt, an welchen sich die am Außenumfang des Einschubstators befestigten Spannelemente abstützen.

In vorteilhafter Weiterbildung der Erfindung ist ferner vorgesehen, daß die Spannelemente vorgespannt sind, wobei die Spannelemente für die Radialverspannung, das heißt für die Kraftübertragung in radialer Richtung, zunächst in eine spielfreie Lage gebracht werden. Anschließend werden die zur Verankerung des Stators vorgesehenen keilförmigen Spannelemente, welche gleichmäßig über den Umfang angeordnet sind, um maximal 4 mm ± 0,5 mm eingetrieben, um die gewünschte Vorspannung zu erreichen.

Die Spannelemente für die Tangentialverspannung, deren Keilfläche gegenüber den Spannelementen für die Radialverspannung um 90° geschwenkt sind und sich in radialer Richtung erstrecken, zunächst auch soweit beaufschlagt, daß ein spielfreier Sitz erreicht wird. Anschließend wird das Spannelement um maximal 0,5 mm eingetrieben.

Entsprechend der Erfindung sind die Spannelemente sowie die Tragelemente gleichmäßig am Umfang und über die axiale Länge des Einschubstators sowie des Gehäuses verteilt angeordnet. In vorteilhafter Ausgestaltung der Erfindung kann dabei vorgesehen sein, daß die Spannelemente und Tragelemente jeweils am Außenumfang des Einschubstators beziehungsweise am Innenumfang des Gehäuses in gleicher Teilung, vorzugsweise in Zwölferteilung, angeordnet sind.

Eine weitere Vereinfachung der Handhabung ergibt sich dadurch, daß entsprechend einer bevorzugten Ausgestaltung der Erfindung die auf halber axialer Länge angeordneten radialen Spannelemente als fest am Einschubstator angeschweißte Doppelkeile mit zu ihren beiden Enden hin keilförmig abgeschrägten Keilflächen ausgebildet sind.

Dabei werden in Weiterbildung der Erfindung die betreffenden Spannelemente von beiden Stirnseiten aus in die entsprechenden von den am Innenumfang des Gehäuses angebrachten Tragelementen gebildeten Führungen für die Spannelemente eingeführt und, wie zuvor beschrieben, vorgespannt. Das Einführen und Verspannen der Spannelemente ist entsprechend der Erfindung so vorgesehen, daß in radialer beziehungsweise tangentialer Richtung die Spannelemente jeweils mit ihren Flachseiten aneinanderliegen und so den Zwischenraum zwischen dem Stator und dem Gehäuse beziehungsweise zwischen den am Gehäuse befestigten Tragelementen ausfüllen, während in axialer Richtung jeweils zwei benachbarte Spannelemente mit ihren Stirnseiten aneinanderliegen. Hierdurch ist gewährleistet, daß eine axiale Verschiebung der vorgespannten Spannelemente ausgeschlossen ist. Die eingebauten und vorgespannten Spannelemente werden jeweils mittels an den Stirnseiten und dort verschweißter Endstücke gesichert. Vorzugsweise werden die Endstücke am Stator angeschweißt.

Entsprechend einer bevorzugten Ausführungsform der Erfindung ist die, wie bereits ausgeführt, gleichmäßig verteilte Anordnung der Radial- und Tangentialverspannung im Verhältnis 2:1 vorgesehen. Das bedeutet, daß bei einer bevorzugten Zwölferteilung beispielsweise zwei paarweise diametral gegenüberliegend und um 90° versetzte Lagen von Spannelementen für die Tangentialverspannung sowie je zwei Paar ebenfalls diametral gegenüberliegend und um 90° zueinander versetzte Lagen von Spannelementen für die Radialverspannung, welche Lagen jeweils um 45° zueinander versetzt sind und die Zwischenräume zwischen den Lagen für die Tangentialverspannung gleichförmig ausfüllen.

Ein erfindungsgemäßes Verfahren zur Herstellung einer derartigen Großmaschine, deren konstruktive Merkmale vorstehend beschrieben wurden, sieht vor, daß zunächst das für den Einbau eines Einschubgenerators vorgesehene Gehäuse freigeräumt und gereinigt wird, daß ein vorgefertigter Stator mit in bestimmter Teilung angeordneten Spannelementen bereitgestellt wird, daß im freigeräumten und gereinigten Gehäuse Tragelemente entsprechend der am Stator vorgesehenen Teilung am Innenumfang angeordnet und befestigt werden, daß der Stator in das zum Einbau vorbereitete Gehäuse eingeschoben, ausgerichtet und mit Hilfe der Spannelemente verankert wird, daß die Spannelemente der Radial- und der Tangentialverspannung vorgespannt werden und daß abschließend die vorgespannten Spannelemente mittels Endstücken gesichert werden.

Vorteilhafterweise werden die Tragelemente am Innenumfang des Gehäuses angeschweißt, wobei die Materialauswahl hierfür entsprechend vorzunehmen ist, um schweißbedingte Fehler und hierdurch bedingte Störfälle zu vermeiden.

Ebenso werden auch die Endstücke mittels Schweißnaht fixiert, wobei vorzugsweise die Verschweißung mit dem Stator vorgesehen ist.

Anhand eines in der schematischen Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine erfindungsgemäße Großmaschine im schematischen Längsschnitt,
- Fig. 2: einen Querschnitt durch die Großmaschine gemäß Fig. 1
- Fig. 3 a: einen Querschnitt durch eine Radialverspannung

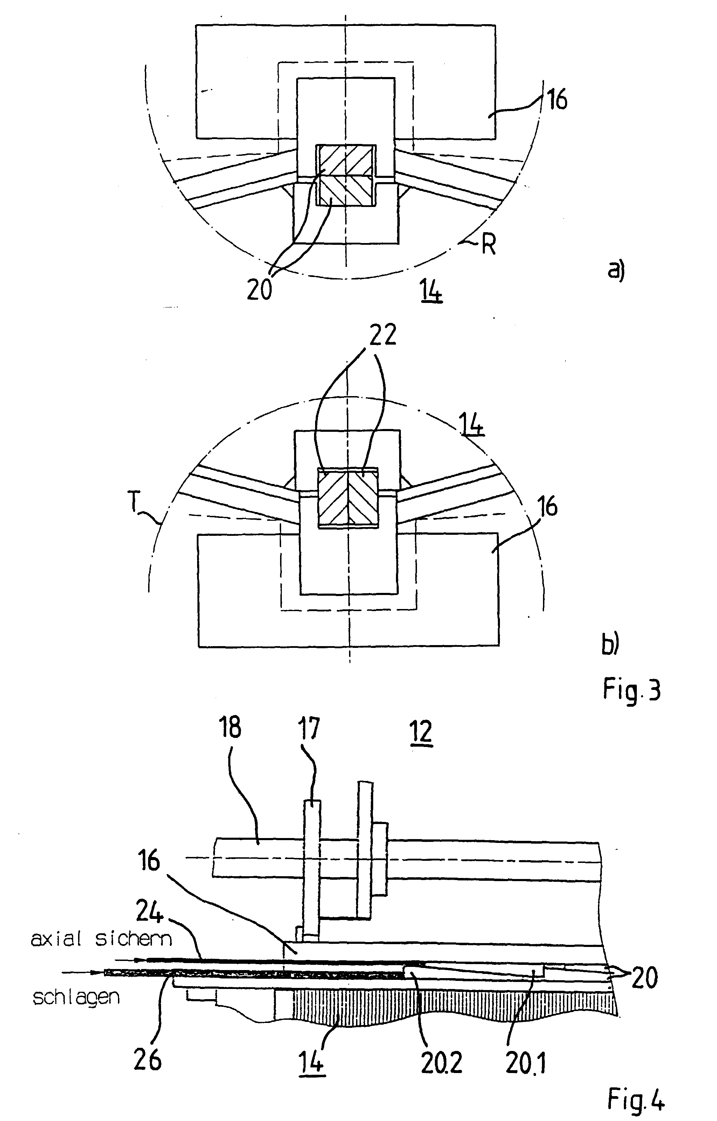

- Fig. 3 b: einen Querschnitt durch eine Tangentialverspannung
- Fig. 4: einen Teillängsschnitt durch einen Stator mit radialen Spannelementen

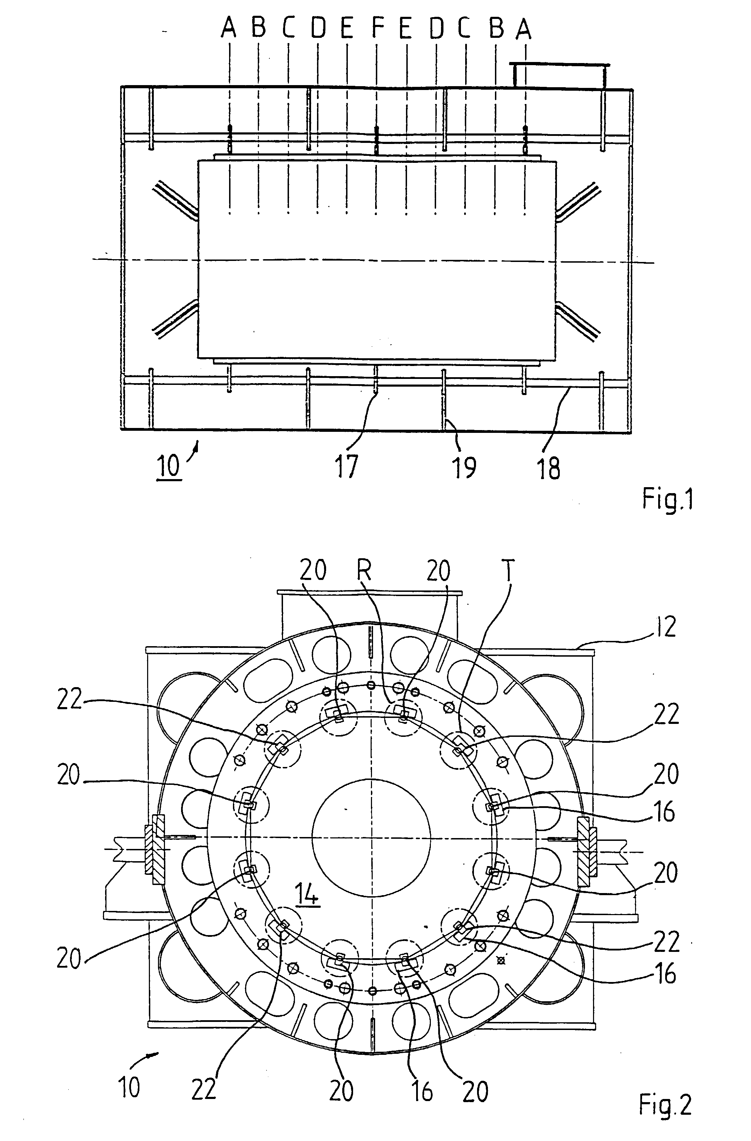

In Fig. 1 und Fig. 2 ist eine erfindungsgemäße Großmaschine 10 mit einem Gehäuse 12 und einem darin angeordneten Stator 14 dargestellt, welcher an mit dem Gehäuse 12 verbundenen Tragelementen 16 verankert ist. Die Tragelemente 16 sind hierbei unter Verwendung von gleichmäßig über den Umfang verteilt angeordneter Haltemittel 17, 18, 19 mit dem Gehäuse 12 verbunden.

Ferner ist in Fig. 1 an der Oberseite eine mit Buchstaben A bis F versehene Skalenanordnung vorgesehen, welche die für den im Gehäuse 12 angeordneten Stator 14 vorgesehenen axialen Lagen von Spannelementen 20, 22, wie sie in Fig. 2 angedeutet und in Fig. 3 beziehungsweise 4 erkennbar sind, kennzeichnen sowie die Reihenfolge ihres Einbaus anzeigen soll.

Demgemäß ist vorgesehen, daß zunächst der Stator 14 mit in der Lage F fest verschweißtem, als Doppelkeil ausgebildetem Basiselement eingesetzt wird. Anschließend erfolgt die Einbringung von Spannelementen 20, 22 für die Lagen E von beiden Seiten des Gehäuses 12. Gleichzeitig erfolgt die Ausrichtung des Stators 14 im Gehäuse 12 in axialer und radialer Richtung. Nach erfolgter Ausrichtung erfolgt die Vorspannung der, wie aus Fig. 2 ersichtlich, gleichmäßig über den Umfang verteilt angeordneten Spannelemente 20, 22, die zunächst spielfrei eingepaßt werden. Anschließend werden die Spannelemente für die Radialverspannung um maximal 4 mm ± 0,5 mm axial eingetrieben und die Spannelemente für die Tangentialverspannung um maximal 0,5 mm.

Wenn die Lage E mit Vorspannung verankert ist, erfolgt die Einbringung der Lage D, wobei zunächst ein Spannelement 20, 22 mit seiner stumpfen Stirnfläche zur Mitte entsprechend Lage F weisend eingeführt wird und anschließend jeweils ein korrespondierendes Spannelement 20, 22 mit seiner abgeschrägten Stirnfläche.

Auch die Lage D der Spannelemente 20, 22 wird zunächst in einen spielfreien Sitz gebracht und anschließend wie zu Lage E beschrieben vorgespannt. Sukzessive werden so die einzelnen Lagen schließlich bis zur Lage A eingebaut und jeweils mit einem hier nicht näher dargestellten Endstück, das vorzugsweise mit dem Statormantel verschweißt ist, gesichert.

In Fig. 3 a ist ein Tragelement 16, welches an das hier nicht näher dargestellte Gehäuse 12 der Großmaschine 10 anschließt, mit darin geführten Spannelementen 20 für die Radialverspannung des Stators 14 gezeigt, deren Keilflächen sich in tangentialer Richtung erstrecken. Hier ist leicht verständlich, das lediglich radial wirkende Kräfte vom Stator 14 auf das Tragelement 16 und von dort auf das hier nicht näher gezeigte Gehäuse 12 der Großmaschine 10 übertragen werden können.

In der darunter gezeigten Fig. 3 b ist eine gleichartige Anordnung mit einem Tragelement 16 gezeigt, die jedoch für Spannelemente 22 für die Tangentialverspannung des Stators 14 vorgesehen sind. Bei dieser Ausgestaltung ist die Erstreckungsrichtung der Keilflächen der Spannelemente 22 radial vorgesehen. Hieran ist erkennbar, daß von dieser Spannelementanordnung lediglich in Umfangsrichtung wirkende Kräfte aufgenommen und über das Tragelement 16 an das Gehäuse 12 der Großmaschine 10 übertragen werden.

In Fig. 4 ist eine ausschnittweise Vergrößerung eines Längsschnittes durch den im Gehäuse 12 der Großmaschine 10 verankerten Stator 14 gezeigt, wobei hier insbesondere die Verfahrensweise beim Einsetzen und Verspannen der Spannelemente 20 zu erkennen ist.

Zum Ausrichten des in das Generatorgehäuse 12 eingeführten Einschubstators 14 werden an vier Stellen der vorgesehenen Spannvorrichtung, gleichmäßig über den Umfang verteilt, jeweils von beiden Stirnseiten aus Keile radial eingelegt, die so lange eingebaut bleiben, bis die gesamte Radialverspannung montiert ist. Nach Entfernen dieser Ausrichtkeile erfolgt der Einbau der Tangentialverspannung.

Bei dem in Fig. 4 veranschaulichten Beispiel wird der Einbau der vorletzten Lage, entsprechend Fig. 1 Lage B, gezeigt, wobei zunächst ein Spannelement 20.1 mit seinem stumpfen Ende zur Mitte hin in die hierfür vorgesehene Ausnehmung im Ringspalt zwischen Stator und Gehäuse eingeführt wird und anschließend ein weiteres Spannelement 20.2 mit seinem keilförmig abgeflachten Ende gegen das bereits eingeführte Spannelement 20.1 geschoben wird.

Ferner kann vorgesehen sein, daß die als gegeneinander gerichete Keile ausgebildeten Spann- und Tragelemente in einer Teilüberlappungsstellung mittels einer Heftschweißung, z. B. beiderseits je ein Schweißpunkt, miteinander verbunden sind und so als Einheit eingesetzt werden. Mit dem ersten Schlag auf das Spannelement wird die Heftung gelöst und der Spannkeil 20.2 auf den Tragkeil 20.1 getrieben.

Um sicherzustellen, daß das zuerst eingeführte Spannelement 20.1 mit seiner stumpfen Stirnseite bündig an bereits eingebauten und vorgespannten Spannelement 20 dicht anliegt, wird dieses mit einer dünnen Führungsleiste 24 stirnseitig beaufschlagt, während mit einer der stumpfen Querschnittsfläche des Spannelements 20.2 entsprechenden Stange 26 das Spannelement 20.2 in den Führungsspalt eingetrieben wird. Hierbei ist vorteilhafterweise an der Stoßstange 26 eine Meßskala angebracht, welche dazu dient, die axiale Eindringtiefe des Spannelements 20.2 ab Erreichen eines spielfreien Sitzes und damit die jeweilige Vorspannung zu bestimmen.

## Patentansprüche

1. Großmaschine (10) mit einem Gehäuse (12), in welchem ein Stator (14) und ein Rotor angeordnet sind, welcher Stator (14) im Gehäuse (12) verankert ist, der Stator (14) als außerhalb des Gehäuses (12) vorgefertigter Einschubstator ausgebildet ist, der in das Gehäuse (12) eingesetzt und darin mittels Radialverspannung (20) und Tangentialverspannung (22) gehalten ist, dadurch gekennzeichnet, daß Verspannungselemente vorgesehen sind, die entweder als Radialverspannung (20) oder als Tangentialverspannung (22) ausgelegt sind.

2. Großmaschine nach Anspruch 1, dadurch gekennzeichnet, daß die Radialverspannung (20) zur Aufnahme aller Kräfte mit Ausnahme der aus einem Kurzschluß resultierenden Kräfte und Momente dient.

3. Großmaschine nach Anspruch 1, dadurch gekennzeichnet, daß die Tangentialverspannung (22) zur Aufnahme der aus dem Kurzschlußmoment resultierenden Kräfte dient.

4. Großmaschine nach einem der vorherigen Ansprüche, dadurch gekennzeichnet, daß die Radial- und die Tangentialverspannung aus Spannelementen (20, 22) zusammengesetzt ist, die am Außenumfang des Einschubstators (14) und am Innenumfang des Gehäuses (12) formschlüssig oder kraft- und formschlüssig angreifen und miteinander zusammenarbeiten.

5. Großmaschine nach einem der vorherigen Ansprüche, dadurch gekennzeichnet, daß am Innenumfang des Gehäuses (12) Tragelemente (16) befestigt sind, an welchem sich die am Außenumfang des Einschubstators (14) befestigten Spannelemente (20, 22) abstützen.

6. Großmaschine nach einem der vorherigen Ansprüche, dadurch gekennzeichnet, daß die Spannelemente (20, 22) vorgespannt sind.

7. Großmaschine nach Anspruch 6, dadurch gekennzeichnet, daß die Spannelemente (20) für die Radialverspannung derart vorgespannt sind, daß sie ab spielfreien Sitz um maximal 4 mm ± 0,5 mm eingetrieben sind.

8. Großmaschine nach Anspruch 6, dadurch gekennzeichnet, daß die Spannelemente (22) für die Tangentialverspannung derart vorgespannt sind, daß sie ab spielfreiem Sitz um maximal 0,5 mm eingetrieben sind.

9. Großmaschine nach einem der vorherigen Ansprüche, dadurch gekennzeichnet, daß die Spannelemente (20, 22) und die Tragelemente (16) gleichmäßig verteilt am Umfang und über die Länge des Einschubstators (14) sowie des Gehäuses (12) verteilt angeordnet sind.

10. Großmaschine nach einem der vorherigen Ansprüche, dadurch gekennzeichnet, daß die Spannelemente (20, 22) und Tragelemente (16) jeweils am Außenumfang des Einschubstators (14) beziehungsweise am Innenumfang des Gehäuses (12) in gleicher Teilung, vorzugsweise in Zwölferteilung, angeordnet sind.

11. Großmaschine nach einem der vorherigen Ansprüche, dadurch gekennzeichnet, daß die bei halber axialer Länge angeordneten Spannelemente als fest am Einschubstator (14) angeschweißte Doppelkeile mit zu ihren beiden Enden hin keilförmig abgeschrägten Keilflächen ausgebildet sind.

12. Großmaschine nach einem der vorherigen Ansprüche, dadurch gekennzeichnet, daß die Spannelemente (20, 22) jeweils von beiden Stirnseiten in die von den Tragelementen (16) gebildeten Führungen eingesetzt sind.

13. Großmaschine nach einem der vorherigen Ansprüche, dadurch gekennzeichnet, daß die Spannelemente (20, 22) sukzessive eingesetzt und positioniert sind und jeweils mit ihren Stirnflächen aneinandergrenzen.

14. Großmaschine nach einem der vorherigen Ansprüche, dadurch gekennzeichnet, daß die Spannelemente (20, 22) für die Radialverspannung beziehungsweise für die Tangentialverspannung in diametral gegenüberliegenden Lagen sowie um 90° versetzt hierzu angeordneten weiteren Lagen vorgesehen sind.

15. Großmaschine nach Anspruch 14, dadurch gekennzeichnet, daß die Lagen von Spannelementen (20) für die Radialverspannung im Verhältnis 2:1 zu den Lagen von Spannelementen (22) für die Tangentialverspannung vorgesehen sind.

16. Verfahren zur Herstellung einer Großmaschine nach einem der vorherigen Ansprüche, dadurch gekennzeichnet, daß das für den Einbau eines Einschubstators (14) vorgesehene Gehäuse (12) freigeräumt und gereinigt wird, daß ein vorgefertigter Einschubstator (14) mit in bestimmter Teilung angeordneten Spannelementen (20, 22) bereitgestellt wird, daß im freigeräumten und gereinigten Gehäuse (12) Tragelemente (16) entsprechend der am Stator (14) vorgesehenen Teilung am Innenumfang angeordnet und befestigt werden, daß der Stator (14) in das zum Einbau vorbereitete Gehäuse (12) eingeschoben, ausgerichtet und mit Hilfe der Spannelemente (20, 22) verankert wird, daß die Spannelemente (20, 22) der Radial- und der Tangentialverspannung vorgespannt werden und daß abschließend die vorgespannten Spannelemente (20, 22) mit Endstücken gesichert werden.

17. Verfahren nach Anspruch 16, dadurch gekennzeichnet, daß die Tragelemente (16) mit dem Gehäuse (12) verschweißt werden.

18. Verfahren nach Anspruch 16 oder 17, dadurch gekennzeichnet, daß die Endstücke angeschweißt werden, vorzugsweise am Stator (14).

## Claims

1. Heavy machine (10) having a housing (12) in which a stator (14) and a rotor are arranged, which stator (14) is anchored in the housing (12), and the stator (14) being constructed as a withdrawable stator which is prefabricated outside the housing (12), inserted into the housing (12) and held therein by means of a radial bracing device (20) and a tangential bracing device (22), characterized in that bracing elements are provided which are designed either as a radial bracing device (20) or as a tangential bracing device (22).

2. Heavy machine according to Claim 1, characterized in that the radial bracing device (20) serves to absorb all forces except the forces and torques resulting from a short circuit.

3. Heavy machine according to Claim 1, characterized in that the tangential bracing device (22) serves to absorb the forces resulting from the short-circuit torque.

4. Heavy machine according to one of the preceding claims, characterized in that the radial bracing device and the tangential bracing device are assembled from clamping elements (20,22) which act on the outer circumference of the withdrawable stator (14) and on the inner circumference of the housing (12) in a self-closed or force-closed and self-closed fashion and cooperate with one another.

5. Heavy machine according to one of the preceding claims, characterized in that fastened to the inner circumference of the housing (12) are support elements (16) on which the clamping elements (20,22) fastened to the outer circumference of the withdrawable stator (14) are supported.

6. Heavy machine according to one of the preceding claims, characterized in that the clamping elements (20, 22) are prestressed.

7. Heavy machine according to Claim 6, characterized in that the clamping elements (20) for the radial bracing device are prestressed in such a way that they are driven in by at most 4 mm ± 0.5 mm starting from a zero-backlash seating.

8. Heavy machine according to Claim 6, characterized in that the clamping elements (22) for the tangential bracing device are prestressed in such a way that they are driven in by at most 0.5 mm starting from a zero-backlash seating.

9. Heavy machine according to one of the preceding claims, characterized in that the clamping elements (20, 22) and the support elements (16) are arranged uniformly distributed on the circumference and distributed over the length of the withdrawable stator (14) and of the housing (12).

10. Heavy machine according to one of the preceding claims, characterized in that the clamping elements (20, 22) and support elements (16) are arranged in each case on the outer circumference of the withdrawable stator (14) or on the inner circumference of the housing (12) with the same spacing, preferably with twelve-fold spacing.

11. Heavy machine according to one of the preceding claims, characterized in that the clamping elements arranged in the case of half the axial length are constructed as double wedges which are welded firmly to the withdrawable stator (14) and have wedge faces bevelled in a wedge-shaped fashion towards their two ends.

12. Heavy machine according to one of the preceding claims, characterized in that the clamping elements (20, 22) are inserted in each case from both end faces into the guides formed by the support elements (16).

13. Heavy machine according to one of the preceding claims, characterized in that the clamping elements (20, 22) are inserted and positioned successively and in each case adjoin one another with their end faces.

14. Heavy machine according to one of the preceding claims, characterized in that the clamping elements (20, 22) for the radial bracing device or for the tangential bracing device are provided in diametrically opposite layers and further layers arranged offset thereto by 90°.

15. Heavy machine according to Claim 14, characterized in that the layers of the clamping elements (20) for the radial bracing device are provided in the ratio of 2:1 to the layers of the clamping elements (22) for the tangential bracing device.

16. Method for producing a heavy machine according to one of the preceding claims, characterized in that the housing (12) provided for mounting a withdrawable stator (14) is cleared and cleaned, in that a prefabricated withdrawable stator (14) having clamping elements (20, 22) arranged with a specific spacing is provided, in that in the cleared and cleaned housing (12) support elements (16) are arranged on and fastened to the inner circumference in accordance with the spacing provided on the stator (14), in that the stator (14) is pushed into the housing (12) prepared for mounting, aligned and anchored with the aid of the clamping elements (20, 22), in that the clamping elements (20, 22) of the radial bracing device and of the tangential bracing device are prestressed, and in that, finally, the prestressed clamping elements (20, 22) are secured by end pieces.

17. Method according to Claim 16, characterized in that the support elements (16) are welded to the housing (12).

18. Method according to Claim 16 or 17, characterized in that the end pieces are welded on, preferably on the stator (14).

## Revendications

1. Machine de grande dimension (10) comportant une carcasse (12) dans laquelle sont disposés un stator (14) et un rotor, ledit stator (14) étant fixé dans la carcasse (12), le stator (14) étant agencé sous forme de stator insérable préfabriqué à l'extérieur de la carcasse (12) et est tenu dans celle-ci par calage radial (20) et par calage tangentiel (22), caractérisée par le fait qu'il est prévu des éléments de calage qui sont conçus soit comme moyens de calage radial (20), soit comme moyens de calage tangentiel (22).

2. Machine de grande dimension selon la revendication 1, caractérisée par le fait que le calage radial (20) sert à supporter toutes les forces à l'exception des forces et moments résultant d'un court-circuit.

3. Machine de grande dimension selon la revendication 1, caractérisée par le fait que le calage tangentiel (22) sert à supporter les forces résultant du moment de court-circuit.

4. Machine de grande dimension selon une des revendications précédentes, caractérisée par le fait que les calages radial et tangentiel sont constitués d'éléments de calage (20, 22) qui agissent par complémentarité de formes ou par serrage et par complémentarité de formes sur la surface extérieure du stator (14) et sur la surface intérieure de la carcasse (12) et coopèrent les uns avec les autres.

5. Machine de grande dimension selon une des revendications précédentes, caractérisée par le fait que des éléments de support (16) sont fixés à la surface intérieure de la carcasse (12), éléments sur lesquels prennent appui des éléments de calage (20, 22) fixés à la surface extérieure du stator insérable (14).

6. Machine de grande dimension selon une des revendications précédentes, caractérisée par le fait que les éléments de calage (20, 22) sont précontraints.

7. Machine de grande dimension selon la revendication 6, caractérisée par le fait que les éléments de calage (20) pour le calage radial sont précontraints de telle sorte que, partant d'un ajustement à jeu nul, ils sont enfoncés de 4 mm ± 0,5 mm maximum.

8. Machine de grande dimension selon la revendication 6, caractérisée par le fait que les éléments de calage (20) pour le calage radial sont précontraints de telle sorte que, partant d'un ajustement à jeu nul, ils sont enfoncés de 0,5 mm maximum.

9. Machine de grande dimension selon une des revendications précédentes, caractérisée par le fait que les éléments de calage (20, 22) et les éléments de support (16) sont uniformément répartis sur le pourtour et sur la longueur du stator (14) et de la carcasse (12).

10. Machine de grande dimension selon une des revendications précédentes, caractérisée par le fait que les éléments de calage (20, 22) et les éléments de support (16) sont disposés respectivement sur la surface extérieure du stator (14) et sur la surface intérieure de la carcasse (12), avec un même pas de division, de préférence avec une division en 12.

11. Machine de grande dimension selon une des revendications précédentes, caractérisée par le fait que les éléments de calage disposés à mi-longueur dans la direction axiale sont réalisés sous la forme de coins doubles soudés au stator (14), avec des surfaces de coin inclinées en direction de leurs deux extrémités.

12. Machine de grande dimension selon une des revendications précédentes, caractérisée par le fait que les éléments de calage (20, 22) sont insérés chaque fois à partir des deux extrémités frontales dans les glissières formées par les éléments de support (16).

13. Machine de grande dimension selon une des revendications précédentes, caractérisée par le fait que les éléments de calage (20, 22) sont mis en place et positionnés successivement et sont mutuellement contigus par leurs surfaces frontales.

14. Machine de grande dimension selon une des revendications précédentes, caractérisée par le fait que les éléments de calage (20, 22) pour le calage radial, voire le calage tangentiel sont prévus dans des positions diamétralement opposées ainsi que dans des positions supplémentaires décalées de 90° par rapport aux premières.

15. Machine de grande dimension selon la revendication 14, caractérisée par le fait que les positions des éléments de calage (20) pour le calage radial sont prévues dans un rapport de 2:1 par rapport aux positions des éléments de calage (22) pour le calage tangentiel.

16. Procédé de fabrication d'une machine de grande dimension selon une des revendications précédentes, caractérisé par le fait que l'on vide et on nettoie la carcasse (12) prévue pour le montage du stator insérable (14), par le fait que l'on prépare un stator (14) préfabriqué avec des éléments de calage (20, 22) disposés avec un pas de division prédéterminé, par le fait que dans la carcasse (12) vidée et nettoyée on dispose et on fixe sur la surface intérieure des éléments de support (16) en accord avec le pas de division du stator (14), par le fait que l'on introduit le stator (14) dans la carcasse (12) préparée pour le montage, on l'aligne et on le bloque à l'aide des éléments de calage (20, 22), par le fait que l'on précontraint les éléments de calage (20, 22) pour le calage radial et le calage tangentiel et par le fait qu'on bloque les éléments de calage (20, 22) précontraints à l'aide de pièces d'extrémité.

17. Procédé selon la revendication 16, caractérisé par le fait que les éléments de support (16) sont soudés à la carcasse (12).

18. Procédé selon la revendication 16 ou 17, caractérisé par le fait que les pièces d'extrémité sont soudées, de préférence sur le stator (14).
